# EUROPEAN PATENT SPECIFICATION

(11) **EP 1 390 697 B1**
(45) Date of publication and mention of the grant of the patent: **28.12.2011**
(21) Application number: 02745330.7
(22) Date of filing: 29.05.2002
(51) Int. Cl.: G01D 9/00, G06F 1/00

(54) **TAMPER-PROOF PAPERLESS RECORDER**
VERFÄLSCHUNGSGESCHÜTZTES PAPIERLOSES AUFZEICHNUNGSGERÄT
ENREGISTREMENT SANS PAPIER PERMETTANT D'ENREGISTRER DE FAÇON PROTEGEE DES INFORMATIONS DE PROCESSUS DE PRODUIT

(30) Priority: 30.05.2001 US 294508 P
(43) Date of publication of application: 25.02.2004
(73) Proprietor: ENDRESS + HAUSER WETZER GmbH + Co. KG, 87484 Nesselwang (DE)
(72) Inventor: SCHMIDT, Dieter, 87484 Nesselwang (DE); BEASLEY, Marc, Greenwood, IN 46143 (US); MABS, Scott, Endress+Hauser Level + Pressure Inc., Greenwood, IN 46143 (US)
(74) Representative: Andres, Angelika Maria
(86) International application number: PCT/EP2002/005912
(87) International publication number: WO 2002/097551

(56) References cited:
- EP-A- 0 495 104
- EP-A- 1 074 906
- US-A- 5 749 913
- PATENT ABSTRACTS OF JAPAN vol. 2000, no. 20, 10 July 2001 (2001-07-10) & JP 2001 066159 A (YOKOGAWA ELECTRIC CORP), 16 March 2001 (2001-03-16)

## Description

### BACKGROUND OF THE INVENTION

### 1. Field of the Invention

The present invention relates generally to the field of product processing, and, more particularly, to methods and apparatus for paperless recording of information such as data for critical control points in continuos product processes.

### 2. Brief Description of the Prior Art

In the interest of public health, various regulatory agencies have required product processors, such as dairy and food producers, to maintain records related to the measurement and control of their processes, e.g., pasteurization processes. Historically, these records have been made and retained on paper, typically, using circulator strip chart paper recorders. In practice, an operator often makes handwritten notations onto the paper chart itself, documenting various details about the specific production run at the time of recording. These notations are followed by the operator's handwritten signature or initials and, in some cases, by a supervisor's signature or initials as well. The specific forms of the notations vary broadly - both within companies and among them. Nevertheless, they give regulatory inspectors confidence that producers are closely monitoring their processes and are in compliance with applicable regulations.

Instrument manufacturers offer several different recorder models that can be used to maintain the permanent records, including HTST (High-Temperature, Short-Time), STLR (Safety Thermal Limit Recorder), and pasteurization flow versions. The commercially available models may record one or more of the following measurements: hot product temperature, hot water temperature, cold product temperature, digital reference temperature at the divert valve, flow rates and/or system pressures (high and low), trends or event marks to indicate divert, process CIP (Clean In Place), or secondary divert.

Many designs have lights to visually indicate the flow of product through a flow divert valve. Some models include PID controller capabilities to control the hot water flow or system backpressure. Most designs use a circular or strip chart with a selectable time base (e.g. 8 or 12 hours) for each chart. Circular chart recorders are used to satisfy the legal recording requirements for most applications, and the PMO guideline lists various equipment and procedure requirements for paper chart recorders.

A paperless or videographic recorder is an instrument that resembles a traditional strip chart or circular chart recorder. However, instead of recording a trace with pen and paper, a paperless recorder displays the trace and/or numeric value on a display screen and records the measured values to electronic memory. Paperless recorders have made significant advancements in recent years. Typically, an electronic paperless recorder can handle more inputs than a paper and pen recorder. Also, many paperless recorders can create text event logs. Further, since paperless recorders typically store data to a disk, they allow users to sort, graph, and print data for trend information and further evaluation. An example of an electronic paperless recorder is dislosed in JP-A-2001 066 159

During the past decade, several interested parties have engaged the U.S. Food & Drug Administration ("FDA") in discussions regarding the use of paperless record systems in FDA regulated environments. The interested parties have included pharmaceutical, biological, and medical device companies; food manufacturers; trade associations; and other Federal agencies. Responding to this interest, the FDA issued a ruling on electronic records and electronic signatures, effective August 20, 1997. The regulation, "21 CFR Part 11," is a reference to Title 21 (Volume 1) of the Code of Federal Regulations, Part 11. Often, this is abbreviated to 21 CFR Part 11 or, when the context is understood, it is referenced simply as "Part 11." Part 11 defines broad requirements under which electronic records will be acceptable in lieu of paper records, and electronic signatures will be equivalent to handwritten signatures or initials on documents and records.

Part 11 does not mandate electronic record keeping, nor does it mandate any particular method for electronic signatures. However, Part 11 does list some criteria for different types of electronic signatures. For instance, Part 11 distinguishes between biometric and nonbiometric electronic signatures, and its Preamble makes further distinctions among "electronic signatures that are executed repetitively during a single, continuous controlled period of time (logged on period)" and those that are not so executed. Part 11 defines a biometric electronic signature as a method of identifying an individual's identity based on measurement of the individual's physical features or repeatable actions where the features and/or actions are both unique to that individual and measurable. A nonbiometric electronic signature is an electronic signature that is not a biometric electronic signature. Depending on a variety of factors, an operator using a nonbiometric electronic signature might need to enter his/her personal password several times during a production shift. Additionally, there may be instances in which a supervisor must also certify the record with his/her own electronic signature.

During recent years, several regulatory agencies, especially departments of environmental protection at the state and local levels, have increasingly accepted paperless records. Also, the pharmaceutical and biotech industries have become active with paperless recording by offering an increasing number of solutions advertised as meeting FDA regulations governing Current Good Manufacturing Practices ("CGMP"). Like traditional paper recorders, paperless recorders differ in the options and features available. Some paperless recorder solutions address Part 11 requirements directly at the recorder, some via the accompanying personal computer ("PC") application software, and some cover the requirements at both the recorder and the PC. Some may have green (forward flow) and red (divert) indicator lights, while others may only record the position of the flow divert valve in the PC viewable data. Unfortunately, Part 11 solutions targeted specifically towards Grade "A" Pasteurized Milk Ordinance ("PMO") regulated continuous flow pasteurization applications have not been widely addressed.

One problem has been that many industrial instruments, including computer based and paperless recording instruments, offer only a single level password or pass code option. This feature often consists of a single alphanumeric entry (or multiple entries in the case of a supplier's "backdoor" pass code) useable by any and all users. However, Part 11-defines an electronic signature as being the legally binding equivalent of an individual's handwritten signature. Universal password-pass code combinations are not unique to a specific individual and thus do not satisfy Part 11's definition for a unique signature.

Another challenge for instrument manufacturers has been to develop a paperless recording format that allows a user to match electronic notations to recorded events without compromising the tamper-proof integrity of the entire electronic record. The measured values themselves must remain secure from manipulation.

Thus, there is a need for a method and apparatus that provides paperless recording of data from critical control points in continuous or discontinuous processes. Further, there is a need for a method and apparatus that provides electronic records and signatures that meet Part 11 requirements.

### SUMMARY OF THE INVENTION

The present invention provides a method for paperless recording in a production or measuring process. The method includes the steps of receiving data from a continuous or discontinuous process, e.g., for a milk product, recording the data on a paperless data storage medium, and recording an electronic signature on the paperless data storage medium in association with at least a portion of the data.

In an alternative embodiment, the present invention provides an apparatus for tamper-proof/sealable paperless recording in a process. The apparatus includes a paperless data storage medium and a processor. The processor is configured to receive data from a continuous or discontinuous process, is further configured to record the data on the paperless data storage medium, and is further configured to record an electronic signature on the paperless data storage medium in association with at least a portion of the data.

The features and advantages of the present invention described above, as well as additional features and advantages, will be readily apparent to those skilled in the art upon reference to the following detailed description and the accompanying drawings.

### BRIEF DESCRIPTION OF THE DRAWING

FIG. 1 is a front view of a paperless recorder assembly according to the present invention.
FIG. 2 is a rear view of a paperless recorder assembly according to the present invention showing certain subassemblies removed from the housing.
FIG. 3 is a hardware block diagram for a paperless recorder according to the present invention.
FIG. 4 is a block diagram representing inputs to and outputs from a recorder according to the present invention.
FIG. 5 shows a block diagram representing the interconnections between an electronic memory management software module and related memory components.
FIG. 6 illustrates schematically the flow of information derived from measured data values, user input, processed and stored data, and outputs produced by a recorder according to the present invention.
FIG. 7 is a diagram of functions prescribed during the setup procedure showing the functional relation of the setup options to data acquisition, processing, analysis and storage for a paperless recorder according to the present invention.
FIG. 8 is a functional flow diagram representing a method of operating a paperless recorder according to the present invention.

### DETAILED DESCRIPTION OF EXEMPLARY EMBODIMENTS

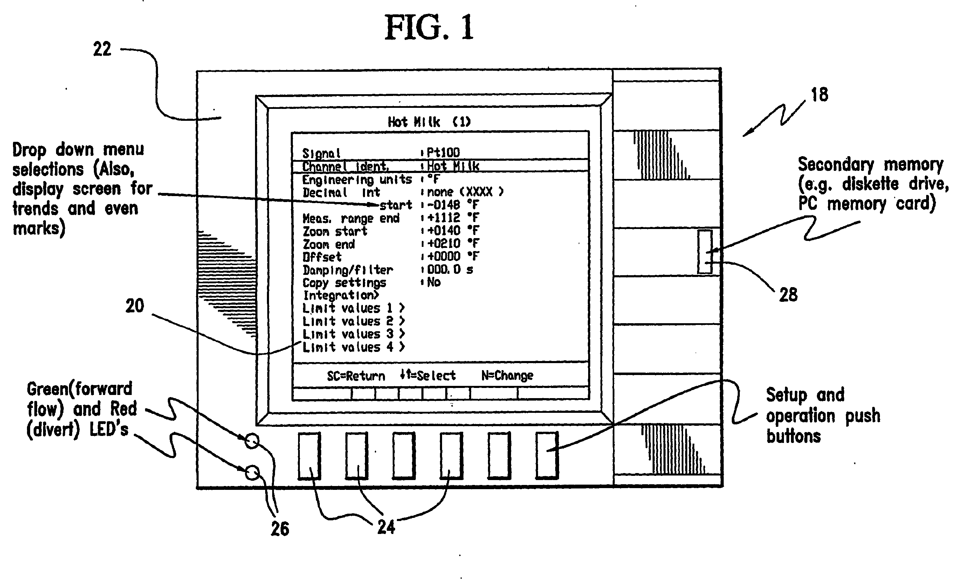

Referring first to Fig. 1, a videographic, paperless recorder 18 according to this invention displays signals, monitors limits, analyses measuring points, stores data internally and archives data on standard diskettes and computer. Located at the front of the housing is a monitor or screen 20 for displaying selectable drop down menus, process trends and event marks. A frame 22, preferably of die cast metal, encircles the screen and carries a transparent display cover. Push buttons 24, located below the screen, are used for setup of the recorder and product and for operating the recorder. Located to the left of the push buttons are LEDs 26, which provide visual indications to the user of important variables related to the process, to which the recorder is being applied. Adjacent the screen is a receptacle 28 for receiving secondary memory, such as a diskette drive or a PC memory card.

In normal operation and on sealed operation, the six function keys 24 are labeled: Login, Group, Analysis, Text, Products, and Others. During unlocked recorder operation, a key "<....>" takes the place of the "Others" key, thereby giving access to "Setup" or other functions, such as "ATA Flash".

The softkeys or function keys 24 make accessible to the user the following, respectively:
"Login"- the functions required for log in/log out.
"Group"- the available group of inputs to be displayed on the video screen.
"Analysis"- the selection list for a particular product batch. The information is supplemented with a comment on data integrity. The batch analysis has an additional selection list of all found batches. A memory search and a "Scroll" ("« »") function are also integrated. The search function is expanded with a "Batch search" function, which jumps to the respective batch start, with a possibility to scroll further.
"Text"- the selection list of short text messages.
"Products"- the selection list of the short text messages allocated to it.
"Others"- all further functions, such as contrast settings and information display.

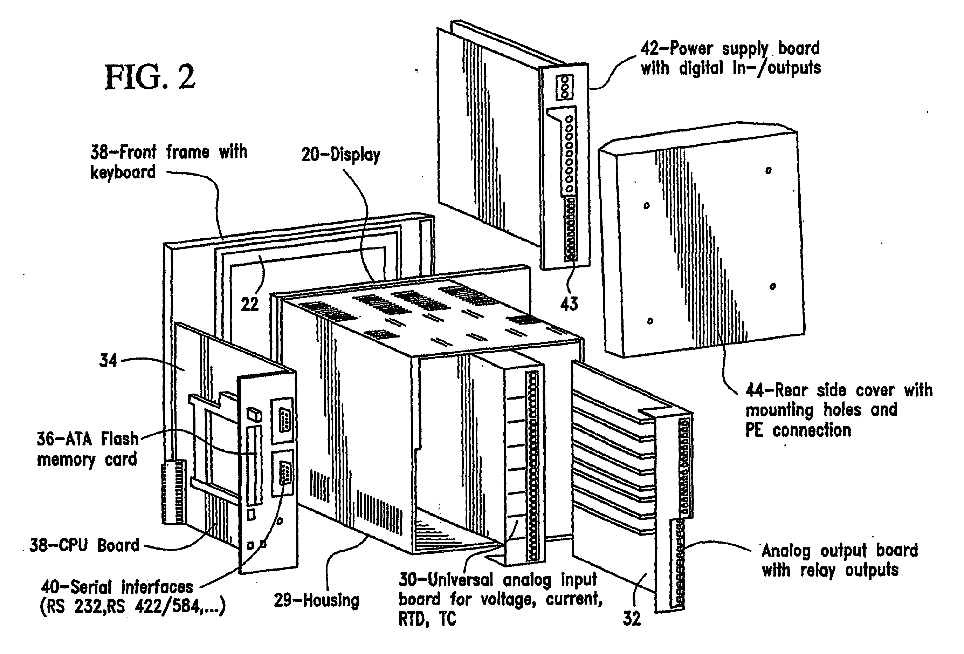

Referring next to Fig. 2, a steel casing 29 contains various electronic circuit boards. The casing is preferably formed of stainless steel, safe from entry of dust and water and protected against undetected opening after being sealed following closure by lead-covered screws.

The boards contained in the casing include a universal analog input board 30; analog output board 32 including relay outputs; a board 34 supporting a ATA flash memory card 35 and driver 36, a CPU board 38, and input and output serial interfaces 40; and a power supply board 42 carrying digital input 43 and output connections. A rear cover 44 closes the rear of the housing 29. Access to the ATA flash drive 36 is mechanically sealed. Access to the interior of the casing is protected behind a lead sealed rear panel cover 44, thereby guarding against unauthorized access.

Depending on the application, the recorder records power failures and the signals from 37 digital inputs, such as flow quantities, pump running times, events and faults such as plant down time. In addition, the recorder has analog measuring points or analog inputs, to record electric currents, preferably in the ranges from +/- 1mA to +/- 40mA, voltages from +/- 50mV to +/- 10V, thermocouples, and RTDs. The recorder produces digital and analog outputs, and control outputs.

By operating a push button on the unit, the recorder allows the operator to select the correct form of display easily: a numeric value or a curve, analog and digital signals separately or together, high resolution curves, curves in single zones and overlapping signals. The signal-grouping feature enable fast grouping of eight inputs per group.

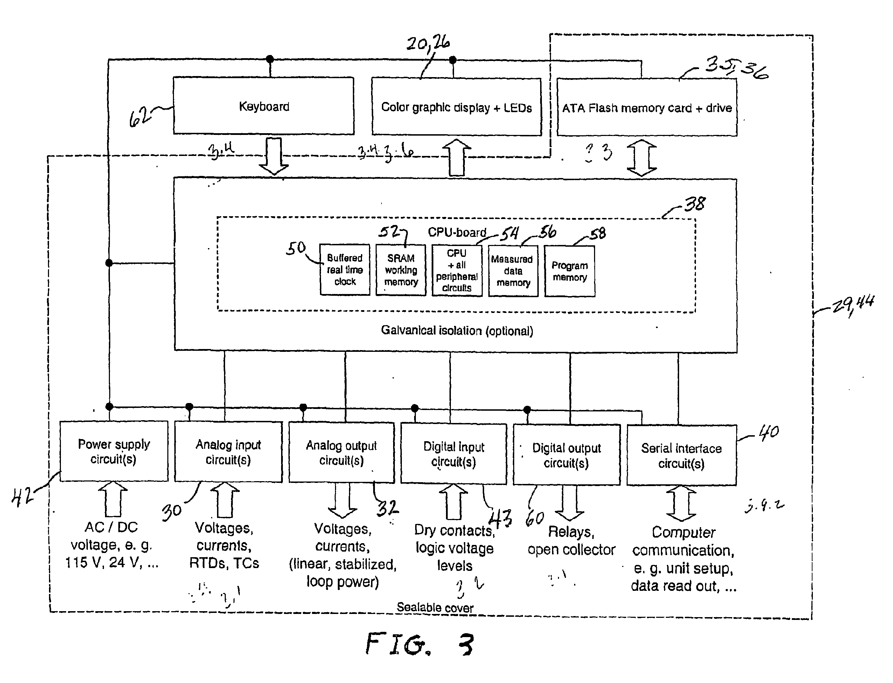

Figure 3 shows in a block diagram the CPU board 38 having an optional galvanic isolation feature, and various inputs and outputs connected to the CPU board. The board 38 carries a buffered real time clock 50, SRAM electronic working memory 52, the CPU and its peripheral circuits 54, measured data memory 56, and program memory 58, preferably ROM. Input to the CPU includes AC and DC power supply circuits 42, analog input circuits 30, digital inputs 43, and serial interface circuits 40.

CPU inputs include analog output circuits 32, digital output circuits 60, serial interfaces 40, and serial interfaces circuits 40. User interfaces communicating with the CPU and each of the inputs and outputs include a keyboard 62 having function keys, a color graphic display 20, LEDs 26, and ATA Flash memory card 35 and its associated drive 36. Housing 29 and cover 44 entirely enclose all but the electronics except the keyboard, the display and LEDs.

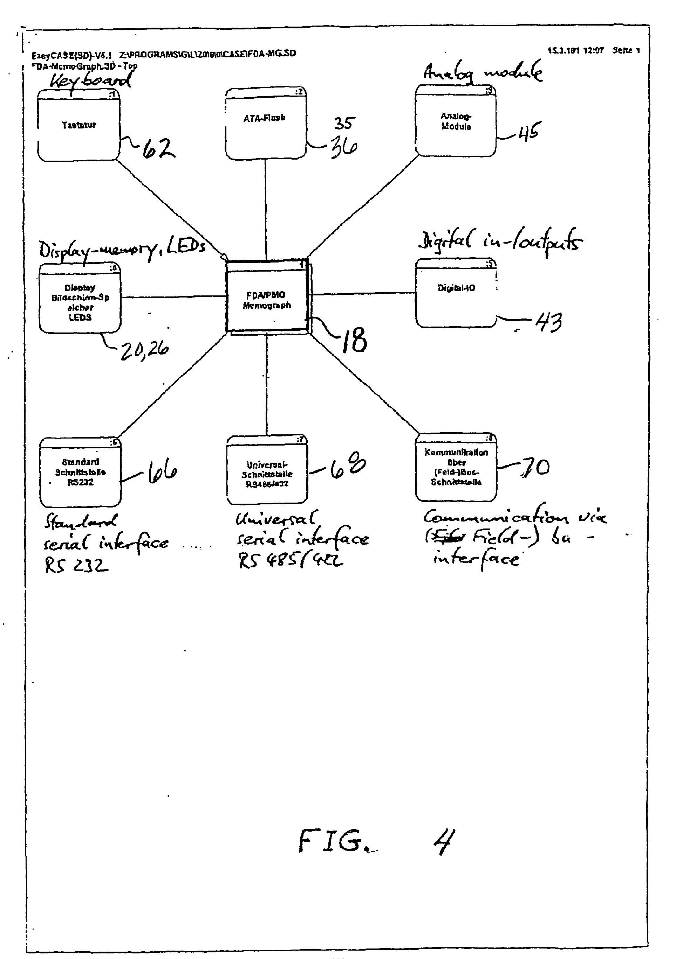

Figure 4 shows in a block diagram the user interfaces including the keyboard 62, LEDs 26, and an ATA flash memory card 35 and its associated driver 36. Also shown there are digital inputs and outputs 43, an analog module 45 accessible to analog inputs 30 and analog outputs:32, and interface circuits 40, which include a standard serial interface 66, universal serial interface 68 and communication bus interface 70. Each universal analog input signal, selectable from a drop down-style menu selection list on screen 20 including ma, mV, V, RTDs, and thermocouples, can be connected directly to the recorder without the need for separate transmitters or transducers.

The recorder system recognizes a faulty serial data transmission using checksums (e.g. CRC) accessible using ReadWin® 2000 application software, a proprietary PC software package available commercially from Endress+Hauser having a business office located at 2350 Endress Place, Greenwood, Indiana. ReadWin® 2000 then sends a corresponding message (e.g. a defined serial command) to the recorder informing that a faulty data transmission has occurred. The recorder reacts to the message by setting relays and trying again.

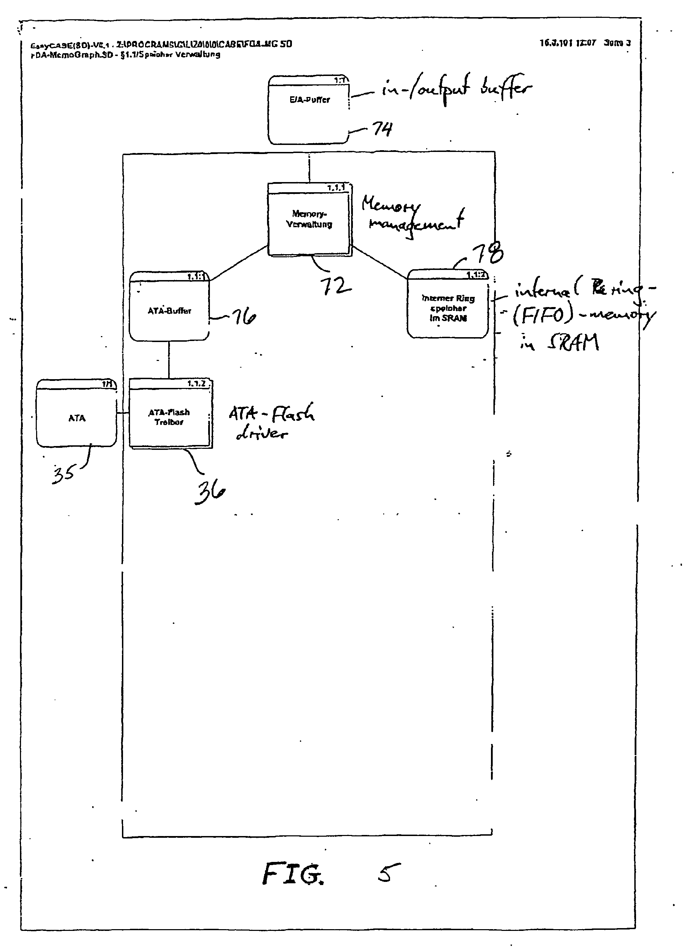

Figure 5 is a block diagram illustrating schematically the interconnections among an electronic memory management software module 72 resident in the recorder, and its connections to an input-output buffer 74, an ATA buffer 76, and internal ring memory 78, which stores data and other information preferably on a first-in-first-out basis in SRAM. The ATA memory buffer 76 is accessible to the ATA flash memory card 35 through an ATA flash driver 36.

Advanced Technology Attachment ATA is a disc drive standard interface for storage devices such as disc drives or flash memory cards. The ATA specification deals with the power band data signal interfaces between a motherboard and the integrated disc controller and drive. ATA drives may use any physical interface a manufacturer desires, provided the embedded translator is included with the proper ATA interface.

The ATA Flash memory card driver 36 of the recorder has a sealable cover that prevents unauthorized removal of the memory card. A minimum of three months recording and process evidence can be realized.

All inputs are recorded every second. Envelope curves, instantaneous-, average-, minimum- and maximum values as well as quantities and events are stored in presettable time cycles. The large internal memory operates as a ring memory. If the ring memory is full, then the oldest data are overwritten using the FIFO principle. Therefore, the most recent data are always available. Data are also constantly and independently being copied in blocks to the ATA flash memory disc 35. A check for faults in the information copied is performed then or at a PC upon storing the data into ReadWin 2000. The data are available and safe from manipulation. If required, the data can then be exported to other programs such as MS-Excel without losing the protected database.

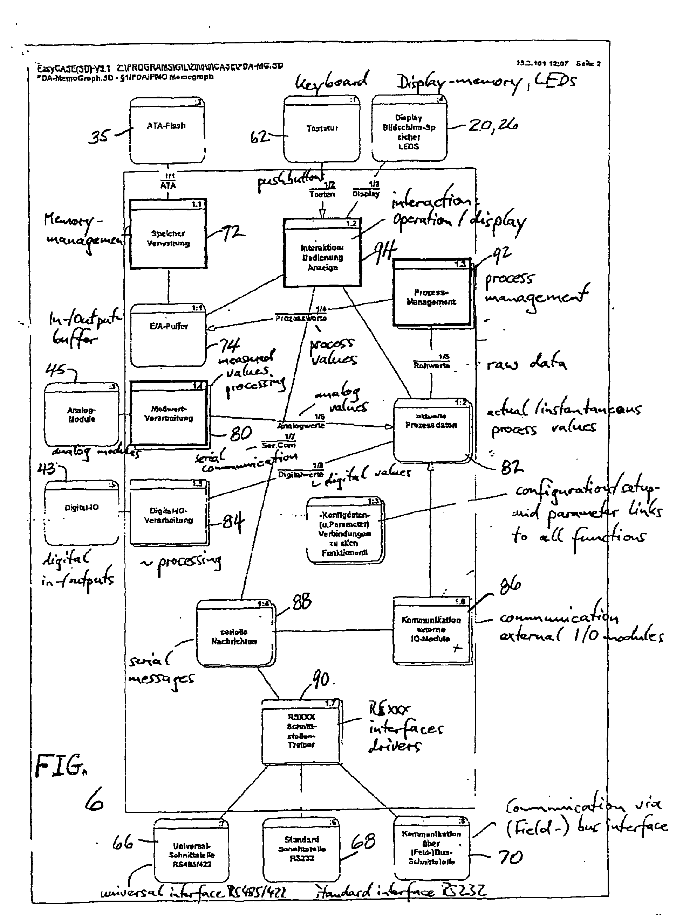

Figure 6 illustrates schematically the exchange of information from the various external connections and interfaces and information flow within the recorder derived from measured data values, user input, processed and stored data, and outputs produced by the recorder. The measured analog values, such as voltages, currents, and analog values from thermocouples and RTDs, present in analog modules 45 are processed at a measured value processing module 80 and transmitted to module 82. Digital inputs, such as logic voltage levels, at ports 43 are processed at 84 and transmitted as digital values to module 84. Similarly, digital output values, such as those connected to relays, are transmitted from module 82 to 84 where they are converted to produce digital outputs at the digital input/output ports 43. Module 82 also receives input and delivers output through an external communication input and output module 86, which communicates through a serial message module 88 and interface drivers 90 to the universal interface 66, standard interface 68 and communication bus interface 70.

The actual instantaneous process values, produced as output from module 82 as raw data, are processed at process management module 92, which produces encrypted output process values. These process values are transmitted through input/output buffer 74 to interaction operation display module 94 and to ATA flash memory 35 through the memory management module 72. Also module 94 is in serial communication with serial messages received through the interfaces 66, 68, 70. In response to user input transmitted from the keyboard 62 and pushbuttons 24 and serial messages, the output of module 94 is sent to the display screen 20, and LEDs 26 also respond to the output produced by module 94.

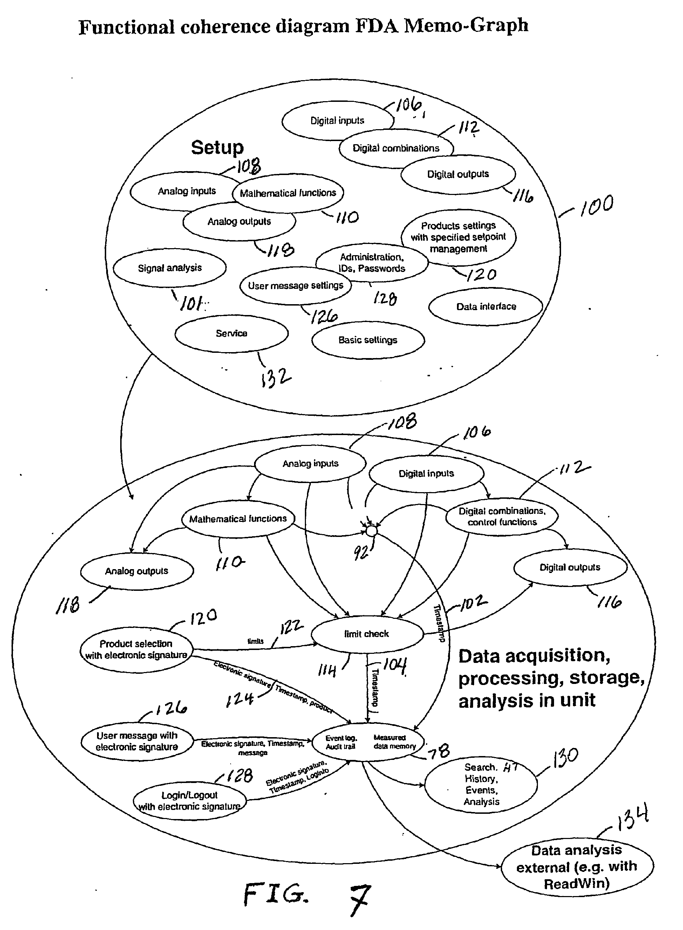

The upper portion 100 of Figure 7 groups the digital inputs and outputs, analog inputs and outputs, mathematical functions, settings, signal analysis routines, and the data interfaces that a user specifies during the procedure for setup of the recorder to record data associated with particular measured data values of the process to be recorded.

The recorder provides automatic signal analysis 101, which creates easily read conditions. Actual and previous signal quantities and peaks are listed in tables. This gives a fast overview of the process during a previous work shift, day or month. The signal analysis function automatically evaluates averages, minimum values, maximum values for analog measurement points; calculates intermediate, daily, monthly, yearly analysis; and displays counter values, operation times and quantities.

The user can specify particular message settings, product settings and the associated setpoint management and administer personal identifications and passwords during setup.

Each product of as many as 12 different products produced by a process to which the recorder is applied can be allocated up to seven set points and its own display grid presented on the screen 20. For example, product "1" might have a 10-grid display, product "2" a 12-grid display. The selection and setup of the different products are done as follows: An authorized administrator having a valid login and password can configure the product specific parameters in the Setup menu. Multiple alarm set points can be allocated per analog, math and digital channel. These set points can then be allocated to the product in the respective screens.

The responsible operator selects a specific product during production using a valid login, the integrated push button (key "Text") and selection list. Or, the product can be selected by using the serial interface and ReadWin® 2000. On request, this selection can also be done using BCD coded digital inputs.

When the operator selects a product, the selection is stored as a message in the event list. A report on the selected product can be displayed both on the screen 20 as well as in ReadWin® 2000. Additionally, a clear allocation of stored measured data and operator can be guaranteed.

After the product has been selected, the allocated alarm set points and the display grid become active. The production process is monitored by the active alarm set points. Alarm conditions are stored in the event list. A heating set point, which is product dependent, is recorded as a virtual channel.

The lower portion of Figure 7 illustrates schematically the communication of inputs data and measured values during acquisition, processing, storage and analysis of data to produce a measured data 102, its associated time stamp, limit check value 104, and its associated time stamp, which are stored in electronic memory 78. Digital input data 106 and measured analog values 108, mathematical functions 110, and digital combination control functions 112 in cooperative combination produce at 92 the measured value 102 and at 114 the limit check value 104. The limit check value is converted to a digital form as digital output 116; analog outputs 118 are produced from the corresponding analog input 108. Product selection occurs at setup 120, as described above, and its selected limit 122 is used to determine the limit check value 104. Electronic signature, timestamp and product selection information 124 pass to memory 78. Similarly, any user messages 126, login and logout information 128, together with the electronic signature, timestamp associated with the message and log information are passed to memory 78.

Digital discrete inputs 106, such as on/off contact or pulse input, may represent such recorder functions as control inputs to control defined unit functions (e.g. lock unit setup, time synchronization, start/stop recording, forward flow/production start/stop, etc.); data produced by a pulse counter to count production quantities; event inputs to record events such as a "pump start" or "valve closure" event; an operation time counter to calculate total operation times; BCD coded control inputs to select a product and process parameters related to the product to be recorded; and BCD coded control inputs to select a text to be stored in the internal memory.

Analog universal inputs 108 may represent such process variables as: differential pressure across a heat exchanger; a magnetic flow meter controlling the flow rate through a hold tube; dual RTD input for a safety thermal limit recorder (STLR); dual and single RTD for cold milk temperature on outlet from pasteurizer; and pressure on outlet from a pasteurizer. Analog outputs 118 in the range 4-20 mA retransmission, may represent pasteurized pressure and differential pressure, temperature of product; product flow rate; and pasteurized pressure after outlet. For SPDT applications, as many as seven "on/off" relay outputs, each relay being assignable to a setpoint used for various process purposes such as for: divert valve; "OK to run pumps" confirmation; maximum pressure cut off; differential pressure limit; and loss of signal on flow rate.

Mathematics functions 110 can be used to linearize quadratic signals and are used for quantity calculation. Basic mathematical calculations link analog measurement points with each other. Trigonometric, absolute, square root and quadratic functions are available. Integration calculates quantities from analogue values. Square root extraction linearizes quadratic signals. Also available are functions to add/subtract counters, calculate sums and averages, calculate total running times, and create logical combinations.

After login, which is automatically stored with date and time, a user can operate the plant, select different types of products, and the parameters to be recorded and controlled against exceeding the predetermined check limits for each parameter by the recorder instrument. With the built-in features of the recorder, the responsible user, produced product, assigned setpoint, inspection status of the plant, events, etc. can be assigned to the recorded data at each occurrence. This procedure and information results in an audit trail, which is stored in memory 78.

The Administrator, whose function is described next, can program setup during installation in the recorder 31 different messages, each having a maximum of 22 characters. The recorder provides drop down menus, to which many of the common event terms can be added, such as "CIP ON or CIP OFF," to minimize the number of events that would need to be manually entered. The user can "mark" recorded data with the predefined texts/event messages. These messages are selectable from the list of programmed messages during the normal operation mode using a drop down menu. Examples of such messages include "valve blocked", "pH electrode changed," etc. When a logged in user selects one of the text messages, it is stored in the event list 130 and the internal ring memory 78 together with date, time and user ID. In this manner the responsible user and the selected text can be assigned to the recorded data at each time. Analysis of the recorded and stored information, data and measured values can be performed externally at a PC 134 using the ReadWin® 2000 application program or another suitable software application.

The operator's identification (ID), comparable to a manual signature, is used for clear identification of a responsible operator. The combination of ID and password is used as an "electronic signature" and are used for releasing various authorization levels.

There are three authorization levels, which are accessible only with a correct combination of ID and password: Administrator level; Inspector level; and User level.

The Administrator level authorizes: making changes to one's own password; maintenance of all ID's (change, add, delete), with the exception of the inspector ID; making changes in Service 132; making changes in Setup 100; and operating the plant (product change, batch start/stop, etc.).

The "Inspector level" authorizes: making changes to one's own password; maintaining inspector ID (change, add, delete); setting the software and hardware seals once the plant has been approved.

The "User level" authorizes: changing one's own password; and operating the plant (product change, batch start/stop, etc.)

A maximum of 36 ID and password combinations are maintained. An ID consists of five to ten alphanumeric characters, must be exclusive, and will be allocated by the administrator (administrator ID and user ID's) or inspector (inspector ID).

The password consists of five to ten alphanumeric characters, and a password itself can occur more than once. This is allocated only by the user and never is visible. However, an ID-password combination can occur only once.

The combination of ID and password must be clear and exclusive. The warning message "not valid/already allocated" appears for passwords already used. The ID and password combination is used as the electronic signature.

When creating each ID and password combination, an authorization level is also allocated using an additional selection field. The respective authorization level can be accessed using the correct ID and password combination.

ID and password combinations can be exported to other units in case of a defective unit or an exchange unit. They must not be altered by a RESET/PRESET.

All IDs and passwords can be maintained both at the unit and at the PC using ReadWin 2000, or another PC application program. Transmitted IDs and passwords are coded, i.e., encrypted. Passwords are not visible.

The first user of the recorder unit is, by definition, the administrator who can open the administrator level using a predetermined or factory password (e.g. ADMIN00). At this time the administrator ID and password are empty. Next, the administrator creates his/her own ID and password, at which point the initial password (e.g. ADMIN00) becomes invalid.

A "General Key" is also available so that the unit can be opened to the administrator level on a "forgotten" administrator password. Only certain authorized service personnel will know this "General Key".

The administrator sets the IDs for the lower user level. The IDs must be unique. The responsible plant operators use their IDs to log on and open the respective authorization level using their own password.

The administrator level, accessible only by using the administrator ID and password, authorizes maintenance (change, add, delete) of all IDs with the exception of the inspector ID; changing his/her own password; making changes in Service and Setup (Plant approval must then be renewed by an inspector); and operating the plant (product change, batch start/stop, etc.). If an ID is deleted, the respective password also is deleted;

Initially, the inspector level is opened using a fixed predetermined password (e.g. INSPECTOO). Afterwards, the inspector must set up his/her own ID and password, and the predetermined password (e.g. INSPECTOO) becomes invalid.

The inspector level, accessible only by using the inspector ID and password, authorizes maintenance (change, add, delete) of the inspector ID, and changing his/her own password; and Setting the software and hardware seals once the plant has been approved. The CPU number will also be indicated. If an ID is deleted, the respective password also is deleted.

Users or operators log on for the first time using the ID allocated by the administrator. At this time, the respective password is still empty. After the initial log on, the operators create their own personalized passwords. It is allowable for different IDs to use identical passwords.

The user level, accessible only by entering an authorized user ID and password, enables: changing one's own password; and operating the plant by inputting product change, batch starts/stops, etc.

At the inspector level, which can only be accessed using the inspector ID and password, the FDA inspector can release the plant for operation. This is done by setting a lead seal on the rear panel of the recorder casing 29 and a software seal once the plant has been approved. The software seal is placed as an identifier in a non-volatile flash memory area. This identifier contains the inspector ID.

The identifier is reset on each change to the system settings (SETUP/SERVICE). This serves the same function as breaking a lead seal. Changes to the system settings are placed on the data carrier as a message in the event listing, and on the ring memory 78.

After the software seal has been broken, the plant is then in a "non approved" state. This condition is regularly indicated on the unit display as an information message and highlighted in each data block header. Additionally, a message is placed in the ring memory event list.

Using a LOGIN/LOGOUT screen, each responsible operator must login and logout using an ID and password. LOGIN and LOGOUT are only possible using an ID and password. LOGIN and LOGOUT are also possible using a PC interface connection cable and RS-232/422/485 serial communication between the recorder and a PC having access to the "ReadWin 2000" application software.

Measured values are also recorded even without a valid LOGIN (unit condition logout). The ID of the responsible operator is then set as <NO NAME>. This is also indicated on the recorder as an information message.

Each LOGIN and LOGOUT is saved to the data carrier as a message in the event list, which includes date, time, and the responsible operator ID. Identical information is retained within ring memory. A "Log book" can be displayed both at the recorder screen and within the PC ReadWin 2000. A change of responsible person can be made using a further LOGIN.

At the end of processing a product batch or during a power outage, the actual condition and responsible person remains active following resumption of power service.

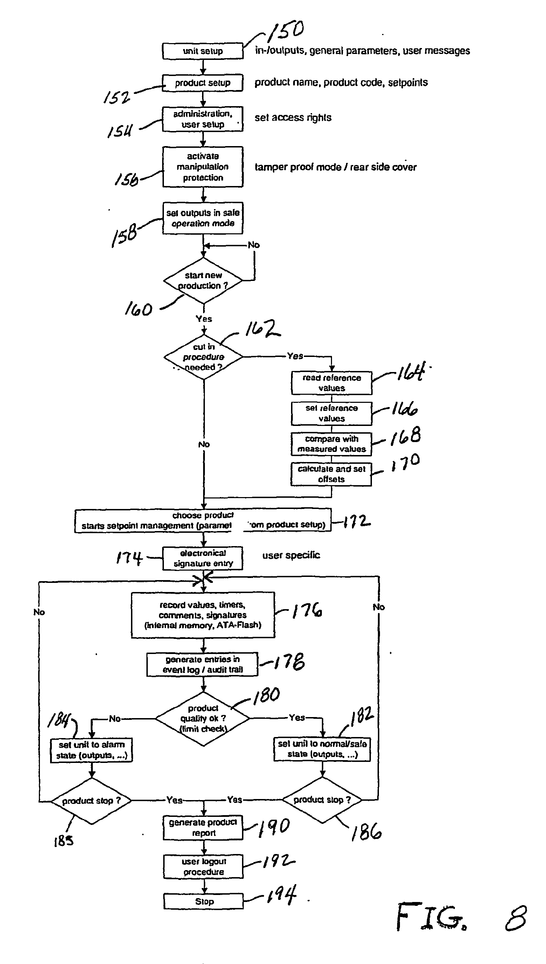

Figure 8 is a diagram representing a method of setting up and operating the recorder to acquire, process, store and analyze data associated with a plant where a product is processed continuously or in batches. At step 150 the recorder is setup by assigning digital and analog inputs and outputs to specific variables of the process, specifying general parameters of the process, and preparing user messages. Each digital input can be configured as a control input such as time synchronization, impulse counter, on/off event recorder, and/or operation time counter. The BCD logic can be used to select or specify short text messages, e.g. using 5 BCD coded digital inputs to specify common event messages. During setup, a short text message can be made by using a dedicated "acknowledgement" digital input, or the entry could be made once the BCD coded digital input has the same condition for at least 3 seconds.

During the setup procedure at step 150, an authorized administrator can define as many as 31 short text messages, each with a maximum of 22 alphanumeric characters, e.g. valve broken, changed RTD, etc. Using a valid login, these short text messages can be selected using the integrated push button (key "Text") and list selection by the responsible operator, or by using the serial interface and ReadWin 2000. On request, this selection can also be done using BCD coded digital inputs. During operation, the selected short text is stored as a message, including the date/time and ID of the responsible operator, in the event list and in the ring memory. A report on the operation events can be displayed both on the recorder and ReadWin® 2000. Additionally, a clear allocation of stored measured data and assigned operator is assured.

Setup continues at 152 where the product name is selected, its code determined, and the setpoints of the process for the selected products are set. Access rights to the recorder are set at 154, whereby the administrator, inspector and user IDs and passwords are selected or assigned, as described above.

To assure that access to the recorder is limited to authorized individuals, access is limited by setting at 156 a sealable rear cover 44, such as a lead seal, providing a physical lockout protection against unauthorized manipulation or access to electronic terminals located at the rear of the recorder. No user, administrator or operator is permitted access to the data manager's operational setup, provided the sealable cover is in place. The data manage software module records an audit trail message whenever the rear cover is removed and whenever the setup configuration is modified. The ATA Flash memory card drive 36 has a sealable cover that prevents unauthorized removal of the memory card.

ReadWin 2000 recognizes and assures data integrity, in part by blending in every data display, including graphic/tabular display, statistics, analysis, etc., a corresponding reference or hint to the quality of data, such as "Data O.K.," thereby validating the integrity of the data. Otherwise, another appropriate message such as "Data manipulated" is blended in.

Next, at 158, all outputs are set in safe operational mode, i.e., records cannot be modified or deleted, except to add notations or comments after user login, and then only after using a unique ID/password combination. Generally, changes to the system settings (SETUP) can be made only after a valid ID and password combination is entered. Afterwards, the plant must be given an inspector's approval again. If a unit setup is created or stored using an ATA Flash card, e.g. for a defective unit replacement or exchange, a valid ID+password combination of an Administrator must be entered before activating this function. All changes to the system settings are saved on the data carrier as a recorded message in the events list, as well as in the internal memory ring. Thus, both the recorder and ReadWin 2000 can display a change in protocol. The corresponding message contains: date and time of the change; the ID of the responsible operator; and the type of change made. If the change was done using the serial interface 68 or ATA Flash card 36, then SETUP change is always displayed.

Once the input is switched from circulation ("L," logic low "0") to throughput ("H," logic high "1"), batch production starts at 160. Based on the digital discrete signals for product selection, all relevant product setup data are activated, including all alarm set points, the associated display grid, and set point management. The operator always maintains control and responsibility for signaling the digital discrete signals to serve as control inputs for the batch production runs.

As the plant is started once a day or once per work shift, and need for a cut-in procedure is indicated in response to the inquiry at step 162, the following actions occur: using a valid login entry, the responsible plant operator initiates a "Cut-in/Cut-out" operation either by using the recorder push buttons 24, by using ReadWin® 2000 on a serial communication link, or by a using a control input. The functions that occur during the "Cut-in/Cut-out" operating mode are: all relays switch; the operator checks the functions of the total plant; and a comparison temperature is set.

This temperature is read out at 164 from an external reference thermometer and is entered at 166 using the push buttons in response to a message on a suitably configured screen 20, or the temperature can be taken over from one of the connected input channels. The recorder compares the reference temperature to a measured heater temperature at 168, and calculates at 170 the difference between the comparison temperature and the actual heater temperature. This difference is the OFFSET to which the measured heater temperature is added.

The OFFSET is valid for all batches until the next LOGOUT (operator change) or until the next Cut in/Cut out (automatic offset without memory reset). Once the Cut in/Cut out operating mode has ended, the plant start is stored in the event list and ring memory 78, including date/time and the ID of the responsible operator. With this message, the calculated offset and comparison temperature are also stored.

If a cut-in procedure is not required, or after the cut-in procedure is completed if it is required, the user at 172 chooses the product and the associated process parameters specified during setup 152. Choosing the product automatically starts the setpoint management routine. Each digital input can be configured as a control input, e.g. time synchronization, impulse counter, on/off event recorder, and operation time counter. The recorder can be configured to recognize and differentiate among batches of different products, e.g. milk and eggs, by using binary coded data (BCD) logic using four digital bits. Thus, a user can use combinations of digital discrete inputs to specify different product streams in the batch process. The selected product is activated on batch start using a throughput/circulation digital input, as described below.

Then, at 174, a user-specific electronic signature entry is entered.

At step 176, the recorder immediately begins automatically to sample periodically and record measured values, timers, comments, and signatures, which information is stored in internal memory 78 and on ATA flash memory 35 cards. Event log entries and audit trail entries are generated and stored in these memory locations at step 178.

Product quality is checked at step 180 by the recorder system performing a comparison to the limit check 104 in the manner described with reference to Figure 7. If product quality is positive, control passes to step 182. At 182, the recorder is set to indicate that a normal or safe product has resulted from the process being monitored and recorded.

Batch production stops upon switching the digital input from "Throughput" (H or 1) to "Circulation" (L or 0). If product processing is to stop, at step 186 control is directed to step 190. Otherwise, if product processing is to continue, control passes to step 176 and the procedure is repeated until the digital input goes low, thereby stopping product processing.

If product quality is negative upon checking process limits, control passes from step 180 to step 184, where an alarm state is set. An example of such an alarm condition can result from temperature monitoring using a connection for a double resistance thermometer. Both temperatures and their difference can be recorded as measured values. Each resistance is connected as an analog input, and both channels are recorded. The deviation is recorded by difference measurements per second and is recorded on a virtual mathematics channel. If the deviation exceeds the present alarm set point, a message "Temperature fault" is displayed and requires acknowledgment by the operator. This message is stored in the event list and in the memory ring. An event protocol is displayed on the recorder screen and in ReadWin 2000. The respective relays operate as configured by the user. At 185, the state of the digital input is checked to see if product processing is to stop, as described with reference to step 186. If so, steps 190, 192 and 194 are performed. Otherwise, if product processing is to continue, control passes to step 176 and the procedure is repeated until the digital input goes low, thereby stopping product processing.

Then a product report is produced at step 190, the user logout procedure is activated and completed at step 192, and the recordation is stopped at 194. Reports, which include batch number, product identification, operator ID, date and time, are created and placed in memory. Data recording to memory remains active or else stops, depending on the selection. Upon every product change and batch end, the data block is closed. When active, the Recording Stop feature stops the data recording to ring memory. A warning, "No data recording," which will be recorded and must be acknowledged, is displayed on screen 20. Data on the ATA Flash cards are updated, and the recorder displays on screen 20 an information message "Production of <product> completed."

Each screen header includes the following information: recorder CPU number; product number; identification of the inspector (plant approved/not approved); and ID of the responsible plant operator(User ID). When using a serial communication interface, ReadWin 2000 uses the CPU number of the recorder to positively find the respective data bank when storing the measured values to the correct data bank.

Each data block is tagged with the ID of the responsible operator, the identifier of the FDA inspector, and the product number. In this manner, each data set's attribute information can be positively identified. Additionally, all measured values are time stamped in the recording process, thereby securing the association of each value to the responsible operator. Each measured value is attributed to an operator, date, and time.

All system, event, and messages (e.g. alarm set point conditions, changes to the system settings, etc.) are added to the event list. The most recent 30 events can be immediately displayed. Once the actual event list is full, either it is coded and transferred as a file to the ATA Flash card, or it is added to an existing file. The file then can be accessed at the recorder or within PC ReadWin® 2000 using a search function. This search feature allows the user to search for specific events (e.g. all changes to the system settings). It is possible to view all events (complete or filtered) that occurred during a specific time span.

From the foregoing description it can be seen that the paperless recorder according to this invention provides the following advantages. Data can be formatted and evaluated electronically. Often, data can be exported to other commercially available applications such as MS-Excel® or other PC applications. Users can recall several recording periods of data, rather than the prior eight or twelve hours only. Users can observe trends that might otherwise be overlooked between several different charts. Event lists are informative and summarize important data using minimum/maximum/average calculations, extended mathematical functions, and text messages. Users can reduce or even eliminate their paper handling and need not manage, store, or maintain large numbers of paper records. The recorder is virtually maintenance-free, with no pens, paper drives, or motor mechanisms.

Users may want to maintain some spare inputs boards, power supply boards, and/or secondary memory storage drives for emergency replacement, but these components are not moving parts and do not suffer wear, as do traditional chart recorders with moving pens and charts. The recorder allows several selectable display modes for viewing trends and data from a variety of perspectives, providing additional information and details. The videographic display screen feature provides drop-down menu lists and help screens, providing easier recorder setup and operation for increased operator comprehension and understanding.

The foregoing description of the invention is illustrative only, and is not intended to limit the scope of the invention to the precise terms set forth. Although the invention has been described in detail with reference to certain illustrative embodiments, variations and modifications exist within the scope of the invention as described and defined in the following claims.

## Claims

1. A electronic paperless recorder (18) for recording and retrieving data and other information related to a product process, the recorder comprising:
a paperless information storage medium;
a processor configured to receive, store and retrieve data and other information related to the process, further configured to record the data and other information on the paperless data storage medium, and further configured to record an electronic signature on the paperless data storage medium in association with at least a portion of the data and other information;
wherein: said processor comprises an electronic central processing unit CPU (38); and said paperless information storage medium comprises main memory and replaceable flash memory (35) accessible to the CPU for electronically storing information related to the process, the flash memory being fixed against removal from the recorder while the recorder is recording information,
the recorder further comprising:
analog input and output circuits (30, 32) for communicating between the CPU and various process sensors information representing measured values of parameters of the process:
digital input and output circuits (43, 60) for communicating between the CPU and various process sensors information representing measured values of process parameters and the logical state of process conditions;
a keyboard (62) and function keys for use by the user to communicate information to the CPU,
a graphic display (20) communicating with the CPU for displaying information to and requesting information from the user;
a casing (29) enclosing the CPU, main memory, flash memory, analog input and output circuits, and digital input and output circuits, the casing sealed by a seal against undetected entry to the casing after the seal is applied:
a flash memory card drive (36);
a sealable cover (44) covering the flash memory card drive, said cover preventing unauthorized removal of a flash memory card; and
the CPU being further configured to record an audit trail message indicating removal of said sealable cover and said sealable casing.

2. The recorder of claim 1, further comprising: communication interface circuits (40) accessible to the CPU and main memory; and a digital computer communicating through the serial communication interface circuits to the CPU and main memory, the computer having software accessible thereto adapted to search and retrieve process information from the main memory, and to present process information to the user, the main memory being accessible to the computer for purposes of retrieving process information from the main memory and communicating said retrieved process information to the computer, the main memory being inaccessible to receive process information from the computer.

3. The recorder of claim 1, wherein the recorder (18) is configured to perform multiple functions, the recorder being further configured to provide: an access control that identifies recorder operators with reference to a user ID-password combination that is unique to each user, limits operator access to specific recorder functions assigned to each operator with reference to said user ID-password combination, and recognizes and records each operator's access to the recorder.

4. The recorder of claim 3, wherein the recorder (18) is further configured to provide: an administrator level access control that contains user IDs unique to each operator and permits an operator having access to the administrator level access control to add, change and delete each user level ID and administrator level ID, to change an administrator level password, to change plant setup, and to operate the process plant; an inspector level access control that permits an operator having access to the inspector level access control to add, change and delete inspector level ID-password combinations; and a user level access control that permits the user to create and change a user level password combination corresponding to an assigned user level ID, and to operate the process plant.

5. The recorder of claim 3, wherein the processor is further configured to detect a malfunction of the recorder or the product process and to set the recorder and its output to a safe operation mode wherein information in main memory cannot be modified or deleted except to add notations or comments by an user.

6. The recorder of claim 3, wherein: the processor is further configured to execute a setup routine wherein a product to be processed is selected, and setpoints of the process corresponding to the selected product are set ; and the processor is further configured continually to periodically sample and store in memory the setpoints, to compare periodically the setpoints against corresponding measured values of the process, and to store in memory comments entered on the keyboard by a user relating to corresponding to process events and process data, and to store in main memory and flash memory the ID-password combination of the user.

7. The recorder of claim 3, wherein the CPU is further configured to produce a product report from the data and information contained in said paperless information storage medium.

8. A recorder system for recording and retrieving information related to a product process, the recorder system comprising: a recorder (18) according to any of the preceding claims; and a digital computer communicating through the serial communication interface circuits to the CPU and main memory, the computer having software accessible thereto adapted to search and retrieve process information from the main memory, and to present process information to the user, the main memory being accessible to the computer for purposes of retrieving process information from the main memory and communicating said retrieved process information to the computer, the main memory being inaccessible to receive process information from the computer.

9. A method for recording data and other information related to a product process with the aid of an electronic recorder adapted to receive input from the process and to produce output to the process, the recorder includes a sealable casing and a cover covering a replaceable flash memory card drive, further comprising: inputting into the recorder database a manipulation protection control: if the casing is removed, recording on the data storage medium through operation of the manipulation protection control, a message indicating removal of the sealable casing; and if the cover is removed, recording on the data storage medium through operation of the manipulation protection control, a message indicating removal of said sealable cover, and the method comprising the steps of:
receiving data and other information from a process; recording the data and other information on a paperless electronic data storage medium; and recording an electronic signature on the paperless data storage medium in association with at least a portion of the data and other information;
inputting into the recorder a database for the process including at least a recorder and plant setup control defining recorder inputs from the process and recorder outputs, process parameters, and predetermined user messages, a setpoint management control containing product names and setpoints for the process corresponding to each product name, and administration and user access control containing user ID-password combinations that are each an unique to each user, inputting into the recorder a user ID-password combination:
permitting a user access to the recorder provided the entered user ID-password combination corresponds to a user ID-password contained in the administration and user access control:
inputting to the recorder a product name and determining the corresponding setpoints for the process with reference to the setpoint management control; sampling periodically while the process is running and recording on the electronic data storage medium measured values of the process and comments input to the recorder by a user.

10. The method of claim 10, further comprising steps of:
defining within the administration and user access control of the recorder an administrator level, inspector level and user level;
inputting into the recorder an administrator level access control containing user IDs unique to each operator;
permitting an operator having access to the administrator level to add, change and delete each user level ID and administrator level ID, to change an administrator level password, to change plant setup, and to operate the process plant; inputting into the recorder an inspector level access control that permits an operator having access to the inspector level to add, change and delete each inspector level ID-password combination; and
inputting into the recorder a user level access control; and permitting a user to create and change a user level password combination corresponding to an assigned user level ID.

11. The method of claim 11, further comprising steps of:
periodically sampling and storing on the data storage medium the setpoints; comparing periodically the setpoints against corresponding measured values of the parameters of the process;
recording on the data storage medium comments entered into the recorder by a user relating to process events and process data; and
recording on the data storage medium the ID-password combination of the user.

12. The method of claim 11 further comprising steps of:
inputting into the recorder database a report preparation procedure; and
producing with reference to the report preparation procedure and the data and information contained on the data storage medium a product report of the process data and recorded events, messages and comments.

## Patentansprüche

1. Ein elektronisches papierloses Registriergerät (18) zur Aufzeichnung und Abfrage von Daten und anderen auf einen Produktprozess bezogenen Informationen, wobei das Registriergerät Folgendes umfasst:
- Ein papierloses Medium zur Informationsspeicherung
- Einen Prozessor, der für Empfang, Speicherung und Abfrage von Daten und anderen prozessbezogenen Informationen konfiguriert ist und der des Weiteren auch dafür konfiguriert ist, die Daten und übrigen Informationen auf dem papierlosen Medium zur Datenspeicherung aufzuzeichnen sowie in Verbindung mit mindestens einem Teil der Daten und anderen Informationen eine elektronische Signatur auf dem papierlosen Medium zur Datenspeicherung aufzuzeichnen.
Der besagte Prozessor umfasst eine elektronische CPU (Central Processing Unit, zentrale Rechnereinheit) (38); das genannte papierlose Medium zur Datenspeicherung umfasst einen Hauptspeicher und einen auswechselbaren Flash-Speicher (35), auf den die CPU zugreifen kann, um prozessbezogene Informationen elektronisch abzuspeichern. Der Flash-Speicher ist entsprechend befestigt, damit er nicht aus dem Registriergerät entfernt werden kann, während dieses Daten aufzeichnet.
Des Weiteren umfasst das Registriergerät:
- analoge Eingangs- und Ausgangsschaltkreise (30, 32) für die Datenübertragung zwischen der CPU und verschiedenen Prozesssensoren, wobei es sich bei diesen Daten um die Messwerte der Prozessparameter handelt;
- digitale Eingangs- und Ausgangsschaltkreise (43, 60) für die Datenübertragung zwischen der CPU und verschiedenen Prozesssensoren, wobei es sich bei diesen Daten um die Messwerte der Prozessparameter und den Logikzustand der Prozessbedingungen handelt;
- eine Tastatur und Funktionstasten zur Verwendung durch den Benutzer, um Daten an die CPU zu übertragen;
- eine grafische Anzeige (20) zur Kommunikation mit der CPU, um dem Benutzer Daten anzuzeigen oder diesen zur Eingabe von Daten aufzufordern;
- ein Gehäuse (29), das die CPU, den Hauptspeicher, den Flash-Speicher, die analogen Eingangs- und Ausgangsschaltkreise sowie die digitalen Eingangs- und Ausgangsschaltkreise umfasst. Das Gehäuse ist durch ein Siegel vor unentdeckten Eingriffen in das Gehäuse geschützt;
- ein Flash-Speicherkartenlaufwerk (36);
- eine versiegelbare Abdeckung (44), die das Flash-Speicherkartenlaufwerk abdeckt und so das unerlaubte Entfernen der Flash-Speicherkarte verhindert, wobei die CPU zudem dafür konfiguriert ist, eine Audit-Trail-Meldung aufzuzeichnen, die auf das Entfernen der genannten versiegelbaren Abdeckung hinweist.

2. Das Aufzeichnungsgerät aus Anspruch 1, das außerdem Folgendes umfasst: Kommunikationsschnittstellenschaltkreise, die für die CPU und den Hauptspeicher zugänglich sind, sowie einen digitalen Computer, der über die seriellen Kommunikationsschnittstellenschaltkreise zur CPU und zum Hauptspeicher kommuniziert, wobei der Computer über eine Software verfügt, die ihm den Zugriff auf diese Speicher ermöglicht und die angepasst wurde, um Prozessdaten im Hauptspeicher zu suchen und daraus abzurufen und dem Benutzer Prozessdaten anzuzeigen. Der Hauptspeicher ist für den Computer zugänglich, damit der Computer Prozessdaten aus dem Hauptspeicher abfragen und eine Übertragung der genannten abgefragten Prozessdaten an den Computer erfolgen kann. Der Hauptspeicher kann umgekehrt jedoch keine Prozessdaten aus dem Computer abfragen.

3. Das Aufzeichnungsgerät aus Anspruch 1, wobei das Gerät für die Ausführung einer Vielzahl von Funktionen konfiguriert wurde. Darüber hinaus wurde das Aufzeichnungsgerät dafür konfiguriert, eine Zugriffssteuerung bereitzustellen, die die Bediener des Aufzeichnungsgerätes anhand einer für jeden Benutzer eindeutigen Kombination aus Benutzer-ID und Passwort identifiziert, anhand der genannten Kombination aus Benutzer-ID und Passwort den Zugriff der Bediener auf spezifische Funktionen des Aufzeichnungsgerätes beschränkt und jeden Zugriff des Bedieners auf das Aufzeichnungsgerät erkennt und aufzeichnet.

4. Das Aufzeichnungsgerät aus Anspruch 3, wobei das Aufzeichnungsgerät des Weiteren dafür konfiguriert wurde: eine Zugriffssteuerung auf Administratorebene zu bieten, die für jeden Bediener eindeutige Benutzer-IDs umfasst und einem Bediener den Zugriff auf die Zugriffssteuerung der Administratorebene erlaubt, um IDs auf Benutzer- und Administratorebene hinzuzufügen, zu ändern und zu löschen, das Passwort auf Administratorebene zu ändern, die Anlagenkonfiguration zu ändern und die Prozessanlage zu bedienen. Außerdem wurde das Gerät dafür konfiguriert, eine Zugriffssteuerung auf Inspekteur-Ebene zu bieten, die dem Bediener den Zugriff auf die Zugriffssteuerung der Inspekteur-Ebene erlaubt, um ID/Passwort-Kombinationen auf Inspekteur-Ebene hinzuzufügen, zu ändern und zu löschen, sowie eine Zugriffssteuerung auf Benutzerebene, die es dem Benutzer erlaubt, eine Passwortkombination, die einer auf Benutzerebene zugewiesenen ID entspricht, zu erzeugen und zu ändern und die Prozessanlage zu bedienen.

5. Das Aufzeichnungsgerät aus Anspruch 3, wobei der Prozessor des Weiteren dafür konfiguriert wurde, eine Fehlfunktion des Aufzeichnungsgerätes oder Produktprozesses zu erkennen und das Aufzeichnungsgerät und seinen Ausgang in einen sicheren Betriebsmodus zu versetzen, wobei sich die Daten im Hauptspeicher nicht modifizieren oder löschen lassen, sondern lediglich Kommentare des Benutzers oder Hinweise hinzugefügt werden können.

6. Das Aufzeichnungsgerät aus Anspruch 3, wobei der Prozessor des Weiteren dafür konfiguriert wurde, eine Setup-Routine durchzuführen, wobei ein zu verarbeitendes Produkt ausgewählt wird und die Prozessschwellwerte, die dem ausgewählten Produkt entsprechen, festgelegt werden. Darüber hinaus ist der Prozessor dafür konfiguriert, kontinuierlich in regelmäßigen Abständen Prüfungen durchzuführen und die Schwellwerte im Speicher zu speichern, die Schwellwerte in regelmäßigen Abständen mit den entsprechenden Messwerten aus dem Prozess zu vergleichen, im Speicher Kommentare zu speichern, die vom Benutzer zu entsprechenden Prozessereignissen und Prozessdaten über die Tastatur eingegeben wurden, und die ID/Passwort-Kombination des Benutzers im Haupt- und im Flash-Speicher zu speichern.

7. Das Aufzeichnungsgerät aus Anspruch 3, wobei die CPU des Weiteren dafür konfiguriert ist, anhand der in dem erwähnten papierlosen Medium zur Datenspeicherung enthaltenen Daten und Informationen einen Produktbericht zu erstellen.

8. Ein Aufzeichnungssystem zur Aufzeichnung und Abfrage von auf einen Produktprozess bezogenen Daten, wobei das Aufzeichnungssystem Folgendes umfasst: ein Aufzeichnungsgerät gemäß einem der voranstehenden Ansprüche und einen digitalen Computer, der über die seriellen Kommunikationsschnittstellenschaltkreise mit der CPU und dem Hauptspeicher kommuniziert, wobei der Computer über eine Software verfügt, die ihm den Zugriff auf diese Speicher ermöglicht und die angepasst wurde, um Prozessdaten im Hauptspeicher zu suchen und daraus abzurufen und dem Benutzer Prozessdaten anzuzeigen. Der Hauptspeicher ist für den Computer zugänglich, damit der Computer Prozessdaten aus dem Hauptspeicher abfragen und eine Übertragung der genannten abgefragten Prozessdaten an den Computer erfolgen kann. Der Hauptspeicher kann umgekehrt jedoch keine Prozessdaten aus dem Computer abfragen.

9. Eine Methode zur Aufzeichnung von Daten und anderen auf einen Produktprozess bezogenen Informationen mithilfe eines elektronischen Aufzeichnungsgerätes, das dafür angepasst wurde, Daten aus dem Prozess zu empfangen und Daten an den Prozess auszugeben. Das Aufzeichnungsgerät umfasst ein versiegelbares Gehäuse und eine versiegelbare Abdeckung, die das Laufwerk für die auswechselbare Flash-Speicherkarte abdeckt. Die Methode umfasst folgende Schritte:
Daten und andere Informationen aus einem Prozess empfangen, Daten und andere Informationen auf einem papierlosen elektronischen Medium zur Datenspeicherung aufzeichnen und - in Verbindung mit mindestens einem Teil der Daten und anderen Informationen - eine elektronische Signatur auf dem papierlosen Medium zur Datenspeicherung aufzeichnen;
Eine auf den Prozess ausgerichtete Datenbank in das Aufzeichnungsgerät eingeben, inklusive (1.) mindestens eines Aufzeichnungsgerätes und einer Anlagenkonfigurationssteuerung, die die Daten, die das Aufzeichnungsgerät aus dem Prozess empfängt, und die Daten, die das Aufzeichnungsgerät an den Prozess sendet, sowie Prozessparameter und vordefinierte Benutzermeldungen enthält, sowie inklusive (2.) einem Einstellwertemanagement (Setpoint Management Control), das Produktnamen und zu jedem Produktnamen die entsprechenden Prozessschwellwerte enthält, sowie inklusive (3.) einer Verwaltung und Nutzerzugriffssteuerung, die zu jedem Benutzer eine eindeutige Benutzer-ID/Passwort-Kombination enthält;
Kombination aus Benutzer-ID/Passwort in das Aufzeichnungsgerät eingeben Benutzerzugriff auf das Aufzeichnungsgerät gewähren, sofern die eingegebene Kombination aus Benutzer-ID/Passwort einer Benutzer-ID/Passwort-Kombination entspricht, die in der Verwaltung und Nutzerzugriffssteuerung enthalten ist;
Einen Produktnamen in das Aufzeichnungsgerät eingeben und die entsprechenden Prozessschwellwerte mit Bezug auf das Einstellwertemanagement festlegen;
Periodische Prüfungen im laufenden Prozess durchführen und die Prozessmesswerte und die vom Benutzer in das Aufzeichnungsgerät eingegebenen Kommentare auf dem elektronischen Medium zur Datenspeicherung aufzeichnen;
Eingabe eines Manipulationsschutzes (Manipulation Protection Control) in die Datenbank des Aufzeichnungsgerätes; wird das Gehäuse entfernt, sorgt der Manipulationsschutz dafür, dass die Aufzeichnung auf dem Medium zur Datenspeicherung erfolgt. In diesem Fall weist eine Meldung auf das Entfernen der versiegelbaren Abdeckung hin.
Wird die Abdeckung entfernt, sorgt der Manipulationsschutz dafür, dass die Aufzeichnung auf dem Medium zur Datenspeicherung erfolgt. Eine Meldung weist auf das Entfernen der genannten versiegelbaren Abdeckung hin.

10. Die Methode aus Anspruch 9, die des Weiteren folgende Schritte umfasst:
Definieren einer Administratorebene, Inspekteur-Ebene und Benutzerebene in der Verwaltung und Nutzerzugriffssteuerung des Aufzeichnungsgerätes;
Eingabe einer Zugriffssteuerung auf Administratorebene, die für jeden Bediener eine eindeutige Benutzer-ID enthält, in das Aufzeichnungsgerät;
Einem Bediener Zugriff auf Administratorebene bieten, um IDs auf Benutzer- und Administratorebene hinzuzufügen, zu ändern und zu löschen, ein Passwort auf Administratorebene zu ändern, die Anlagenkonfiguration zu ändern und die Prozessanlage zu bedienen;
Eingabe einer Zugriffssteuerung auf Inspekteur-Ebene in das Aufzeichnungsgerät, die einem Bediener den Zugriff auf Inspekteur-Ebene ermöglicht, um ID/Passwort-Kombinationen auf Inspekteur-Ebene hinzuzufügen, zu ändern und zu löschen;
Eingabe einer Zugriffssteuerung auf Benutzerebene in das Aufzeichnungsgerät, damit ein Benutzer Passwortkombinationen auf Benutzerebene entsprechend einer zugewiesenen ID auf Benutzerebene erzeugen und ändern kann.

11. Die Methode aus Anspruch 10, die des Weiteren folgende Schritte umfasst:
Periodische Prüfung und Speicherung der Schwellwerte auf dem Medium zur Datenspeicherung;
Periodischer Vergleich der Schwellwerte mit den Messwerten der Prozessparameter;
Aufzeichnung der von einem Benutzer zu Prozessereignissen und Prozessdaten in das Aufzeichnungsgerät eingegebenen Kommentare auf dem Medium zur Datenspeicherung;
Aufzeichnung der ID/Passwort-Kombination des Benutzers auf dem Medium zur Datenspeicherung.

12. Die Methode aus Anspruch 11, die des Weiteren folgende Schritte umfasst:
Eingabe eines Verfahrens zur Berichterstellung in die Datenbank des Aufzeichnungsgerätes;
Erstellen eines Produktberichts zu Prozessdaten, aufgezeichneten Ereignissen, Meldungen und Kommentaren unter Verweis auf das Verfahren zur Berichterstellung und die auf dem Medium zur Datenspeicherung enthaltenen Daten und Informationen.

## Revendications

1. Enregistreur électronique sans papier (18) destiné à l'enregistrement et à la récupération de données ou d'autres informations relatives à un processus de production, l'enregistreur comprenant :
un support de stockage d'informations sans papier ;
un processeur configuré pour recevoir, stocker et récupérer des données et d'autres informations relatives au processus, en outre configuré pour enregistrer les données et d'autres informations sur le support de stockage de données sans papier, et en outre configuré pour enregistrer une signature électronique sur le support de stockage de données sans papier en association avec au moins une partie des données et d'autres informations ;
le processeur comprenant une unité centrale électronique (38) ; et le support de stockage d'informations sans papier comprenant une mémoire principale et une mémoire flash (35) interchangeable, accessibles à l'UC à des fins de stockage électronique des informations relatives au processus, la mémoire flash étant protégée de façon à empêcher son retrait de l'enregistreur pendant que l'enregistreur enregistre des informations ; et l'enregistreur comprenant en outre :
des circuits d'entrée et de sortie analogiques (30, 32) destinés à la communication entre l'UC et les différents capteurs du processus représentant les valeurs mesurées des paramètres de processus et l'état logique des conditions de processus ;
un clavier et des touches de fonction destinés à être utilisés par l'utilisateur pour communiquer les informations à l'UC ;
un affichage graphique (20) communiquant avec l'UC à des fins d'affichage des informations pour l'utilisateur, et pour les requêtes d'informations de l'utilisateur ;
un boîtier (29) hébergeant l'UC, la mémoire principale, la mémoire flash, les circuits d'entrée et de sortie analogiques et les circuits d'entrée et de sortie numériques, le boîtier étant rendu étanche par un joint par rapport à une entrée non détectée dans le boîtier après que le joint ait été appliqué ;
un lecteur de carte mémoire flash (36) ;
un couvercle (44) scellable recouvrant le lecteur de carte mémoire flash, le couvercle empêchant le retrait non autorisé d'une carte mémoire flash ; et
l'UC étant en outre configurée pour enregistrer un message de piste de vérification indiquant le retrait du couvercle scellable.

2. Enregistreur selon la revendication 1, comprenant en outre : des circuits d'interface de communication accessibles à l'UC et à la mémoire principale ; et un ordinateur numérique communiquant par le biais des circuits d'interface de communication série avec l'UC et la mémoire principale, l'ordinateur disposant d'un logiciel accessible à ces derniers, adapté pour la recherche et la récupération des informations de processus depuis la mémoire principale, et pour présenter les informations de processus à l'utilisateur, la mémoire principale étant accessible à l'ordinateur à des fins de récupération des informations de processus depuis la mémoire principale et communiquant les informations de processus récupérées à l'ordinateur, la mémoire principale étant inaccessible pour la réception des informations de processus depuis l'ordinateur.

3. Enregistreur selon la revendication 1, celui-ci étant configuré de manière à exécuter de multiples fonctions, l'enregistreur étant configuré en outre pour fournir : un contrôle d'accès identifiant les opérateurs de l'enregistreur avec référence à une combinaison d'ID et de mot de passe utilisateur, qui est unique pour chaque l'utilisateur, limitant l'accès aux opérateurs concernant des fonctions spécifiques de l'enregistreur, et identifiant et enregistrant tous les accès des opérateurs à l'enregistreur.

4. Enregistreur selon la revendication 3, l'enregistreur étant configuré en outre pour fournir :
un contrôle d'accès au niveau administrateur contenant les ID utilisateur uniques pour chaque opérateur et permettant à un opérateur d'accéder au contrôle d'accès au niveau administrateur, en vue d'ajouter, de modifier et de supprimer chaque ID de niveau utilisateur et chaque ID de niveau administrateur, de modifier un mot de passe au niveau administrateur, de modifier une configuration d'installation et d'exploiter une installation de traitement ; un contrôle d'accès au niveau inspecteur permettant à un opérateur d'accéder au contrôle de niveau d'accès inspecteur en vue d'ajouter, de modifier et de supprimer les combinaisons d'ID et de mot de passe du niveau inspecteur ; et un contrôle d'accès au niveau utilisateur permettant à l'utilisateur de créer et modifier une combinaison de mot de passe au niveau utilisateur correspondant à un ID de niveau utilisateur assigné, et en vue d'exploiter l'installation de traitement.

5. Enregistreur selon la revendication 3, pour lequel le processeur est configuré en outre pour détecter un dysfonctionnement de l'enregistreur ou du processus de production, et pour mettre l'enregistreur et sa sortie dans un mode de fonctionnement sûr, au sein duquel les informations dans la mémoire principale ne peuvent pas être modifiées ni supprimées, à l'exception de l'ajout de notes ou de commentaires par un utilisateur.

6. Enregistreur selon la revendication 3, pour lequel : le processeur est configuré en outre pour exécuter un sous-programme de configuration, au sein duquel un produit à traiter est sélectionné et où des points de consigne du processus, correspondant au produit sélectionné, sont définis ; et le processeur est en outre configuré continuellement pour échantillonner et stocker périodiquement en mémoire les points de consigne en vue de comparer périodiquement les points de consigne par rapport aux valeurs mesurées correspondantes du processus, et de stocker en mémoire les commentaires entrés au clavier par un utilisateur relatifs aux événements et données de processus correspondants, et de stocker en mémoire principale et en mémoire flash la combinaison d'ID et de mot de passe de l'utilisateur.

7. Enregistreur selon la revendication 3, pour lequel l'UC est configurée en outre pour produire un rapport de production à partir des données et des informations contenues dans le support de stockage d'informations sans papier.

8. Système enregistreur destiné à l'enregistrement et à la récupération d'informations relatives à un processus de production, le système enregistreur comprenant : un enregistreur conforme à l'une des revendications précédentes ; et un ordinateur numérique communiquant à travers les circuits d'interface de communication série avec l'UC et la mémoire principale, l'ordinateur disposant d'un logiciel accessible à ces derniers, adapté pour la recherche et la récupération des informations de processus depuis la mémoire principale, et pour présenter les informations de processus à l'utilisateur, la mémoire principale étant accessible à l'ordinateur à des fins de récupération des informations de processus depuis la mémoire principale et communiquant les informations de processus récupérées à l'ordinateur, la mémoire principale étant inaccessible pour la récupération des informations de processus depuis l'ordinateur.

9. Méthode d'enregistrement de données et d'autres informations relatives à un processus de production avec l'aide d'un enregistreur électronique adapté pour recevoir l'entrée venant du processus et pour produire la sortie vers le processus, l'enregistreur comprenant un boîtier scellable et un couvercle scellable recouvrant un lecteur de carte mémoire flash interchangeable ; la méthode comprenant les étapes suivantes :
réception de données et d'autres informations provenant d'un processus ; enregistrement des données et des autres informations sur un support de stockage de données électronique sans papier ; et enregistrement d'une signature électronique sur le support de stockage de données sans papier en association avec au moins une partie des données et des autres informations ;
chargement dans l'enregistreur d'une base de données pour le processus, incluant au minimum un enregistreur et un contrôle de configuration d'installation définissant des entrées d'enregistreur à partir du processus et des sorties d'enregistreur, paramètres de processus et messages utilisateur prédéterminés, un contrôle de gestion de points de consigne contenant des noms de produits et des points de consigne pour le processus, correspondant à chaque nom de produit, et un contrôle d'accès administrateur et utilisateur contenant des combinaisons d'ID et de mot de passe utilisateur, qui sont uniques pour chaque utilisateur ; chargement dans l'enregistreur d'une combinaison d'ID et de mot de passe ;
autorisation d'un accès utilisateur à l'enregistreur à condition que la combinaison d'ID et de mot de passe entrée corresponde à l'ID et au mot de passe utilisateur contenus dans le contrôle d'accès administrateur et utilisateur ;
entrée dans l'enregistreur d'un nom de produit et détermination des points de consigne correspondants pour le processus en référence au contrôle de gestion des points de consigne ; échantillonnage périodique pendant que le processus est en fonctionnement et enregistrement sur le support de stockage de données électronique des valeurs mesurées du processus et des commentaires entrés dans l'enregistreur par un utilisateur ;
entrée dans la base de données de l'enregistreur d'un contrôle de protection contre les manipulations ;
en cas de démontage du boîtier, enregistrement sur le support de stockage de données par le biais du fonctionnement du contrôle de protection contre les manipulations, un message indiquant le retrait du boîtier scellable ; et
en cas de démontage du couvercle, enregistrement sur le support de stockage de données par le biais du fonctionnement du contrôle de protection contre les manipulations, un message indiquant le retrait du couvercle scellable.

10. Méthode selon la revendication 9, comprenant en outre les étapes suivantes :
définition au sein du contrôle d'accès administrateur et utilisateur de l'enregistreur d'un niveau administrateur, d'un niveau inspecteur et d'un niveau utilisateur ;
entrée dans l'enregistreur d'un contrôle d'accès au niveau administrateur contenant des ID utilisateur uniques pour chaque opérateur ;
autorisation à un opérateur d'accéder au niveau administrateur en vue d'ajouter, de modifier ou de supprimer chaque ID de niveau utilisateur et ID de niveau administrateur, en vue de modifier un mot de passe de niveau administrateur, en vue de modifier la configuration de l'installation, et en vue d'exploiter l'installation de traitement ; entrée dans l'enregistreur d'un contrôle d'accès au niveau inspecteur permettant à un opérateur d'accéder au niveau inspecteur en vue d'ajouter, de modifier et de supprimer chaque combinaison d'ID et de mot de passe de niveau inspecteur ; et
entrée dans l'enregistreur d'un contrôle d'accès au niveau utilisateur ; et autorisation à un utilisateur à créer et modifier une combinaison de mot de passe de niveau utilisateur correspondant à un ID de niveau utilisateur assigné.

11. Méthode selon la revendication 10, comprenant en outre les étapes suivantes :
échantillonnage périodique et stockage des points de consigne sur le support de stockage de données ; comparaison périodique des points de consigne par rapport aux valeurs mesurées correspondantes des paramètres du processus ;
enregistrement sur le support de stockage de données des commentaires entrés dans l'enregistreur par un utilisateur, relatifs aux événements de processus et aux données de processus ; et
enregistrement sur le support de stockage de données de la combinaison d'ID et de mot de passe de l'utilisateur.

12. Méthode selon la revendication 11, comprenant en outre les étapes suivantes :
entrée dans la base de données de l'enregistreur d'une procédure de préparation de rapport ; et production en référence à la procédure de préparation de rapport et aux données et informations contenues sur le support de stockage de données, d'un rapport de produit des données de processus et des événements, messages et commentaires enregistrés.
